# EUROPEAN PATENT APPLICATION

(11) **EP 1 253 593 A1**
(43) Date of publication of application: **30.10.2002**
(21) Application number: 01303815.3
(22) Date of filing: 26.04.2001
(51) Int. Cl.: G11B 27/32, G11B 20/12, G11B 7/007, G06F 17/30, H04N 5/85, G11B 27/10, G11B 19/02, G06F 17/60

(54) **Video data and web page data coexisted compact disk**

(71) Applicant: Lee, Cheng-Tao Paul, Taipei City (TW)
(72) Inventor: Lee, Cheng-Tao Paul, Taipei City (TW)
(74) Representative: Gee, Steven William

(57) **Abstract**

A video data and web site data stored compact disk (CD) comprises: a first data zone for storing and providing video data to a VCD player for reproduction, and a second data zone for storing and providing video data of a plurality of web pages for a browser to execute hypertext link with the first data zone, so that the VCD player can perform playback of the video data stored in the first data zone when the CD is placed in the VCD player or the browser can access the web pages when the CD is placed in a computer.

## Description

### FIELD OF THE INVENTION

This invention relates generally to a compact disk (CD), particularly to a compact disk in which video data and web page data are coexisted.

### BACKGROUND OF THE INVENTION

When a video compact disk (VCD/DVD/SVCD) is driven by a CD player or by a playback software in a computer, people can view pictures or movies displayed in a TV screen or a computer monitor. However, so far, the video data in a compact disk cannot be availed to linking of a computer with an e-business web site for selection and purchase of movie pictures.

### SUMMARY OF THE INVENTION

The primary object of this invention is to provide a compact disk, in which data can be reproduced by a VCD (video compact disk) player or accessed by a browser in a computer and furthermore linked with an e-business web site.

In order to realize abovesaid objects, a video data and web site data stored CD comprises: a first data zone for storing and providing video data to a VCD player for reproduction, and a second data zone for storing and providing video data of a plurality of web pages for a browser to execute hypertext link with the first data zone, so that the VCD player can perform playback of the video data stored in the first data zone when the CD is placed in the VCD player or the browser can access the web pages when the CD is placed in a computer.

For more detailed information regarding advantages or features of this invention, at least an example of preferred embodiment will be elucidated below with reference to the annexed drawings.

### BRIEF DESCRIPTION OF THE DRAWINGS

The related drawings in connection with the detailed description of this invention, which is to be made later, are described briefly as follows, in which:

Fig. 1 is a directory of a CD embodiment of this invention;

Fig. 2 is a schematic view showing that a user is playing a VCD player for playback of the CD of this invention;

Fig. 3 is a schematic view showing that a user is browsing the CD of this invention with a browser;

Fig. 4 is a typical example of the display shown in Fig. 3; and

Fig. 5 is a typical example showing that a user is using the CD of this invention to link with a default web site.

### DETAILED DESCRIPTION OF THE PREFERRED EMBODIMENT

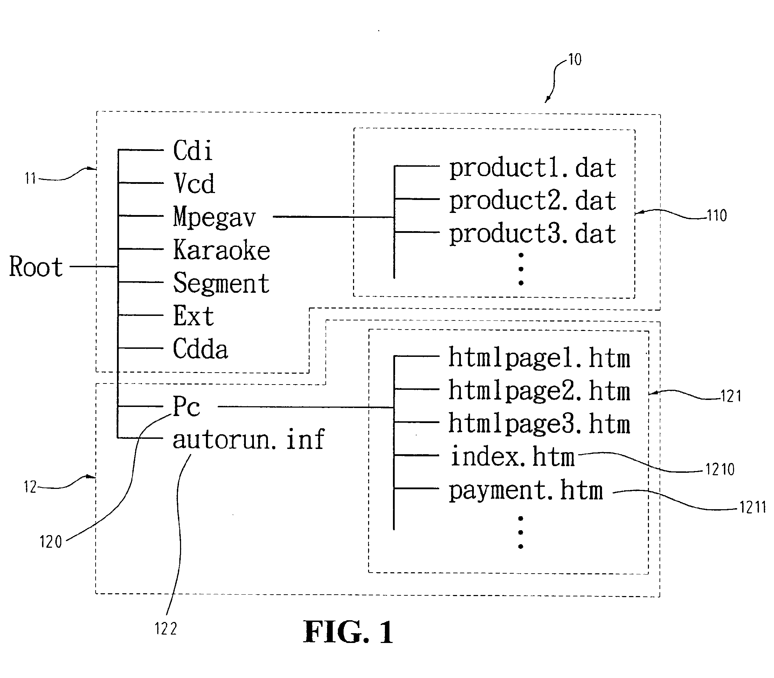

As illustrated in Fig. 1, a compact disk (CD) **10** comprises a first data zone **11** and a second data zone **12.**

The first data zone **11** is provided for storing video data and offering the same to a video CD (DVD/VCD/SVCD) player for playback, and this data zone can be formatted in VCD, SVCD, or DVD. In VCD format shown in Fig. 1, a root directory of the CD **10** in the first data zone **11** comprises a plurality of directories including "Cdi", "Vcd", "Mpegav", "Segment", "Ext", "Cdda", wherein the "Mpegav" directory further comprises a plurality of video files **110,** containing "productl.dat", "product2.dat", "product3.dat", etc. When the CD **10** is placed in the VCD (video compact disk) player, playback of the video files **110** in the first data zone **11** can be performed sequentially, that is, the pictures and sounds of the file "product1.dat", "product2.dat", "product3.dat" can be presented in a TV screen.

The second data zone **12** is provided for storing a plurality of web page linking files **121** and offering the same to a computer's browser for hypertext link with the video files **110** in the first data zone **11.** The CD **10** of this invention further contains an autorun file **122** which is to be executed automatically when the CD **10** is put into a computer, wherein the autorun file **122** contains at least a command for execution of a browser so that the computer can run the browser and access the web page linking files **121.** A typical syntax of the autorun file **122** is as the follows:
[autorun]
OPEN = EXPLORER.EXE \Pc\index.htm
ICON = xxxx.ico
where a computer runs the browser "EXPLORER.EXE" to access "\Pc\index.htm" **1210** in the web page linking files **121.**

For e-business application, in the video files **110** of the first data zone **11**, the "productl.dat" is a movie for showing company (A)'s cellular phones; the "product2.dat" is a movie for showing company (B)'s cosmetics; and the "product3.dat" is a movie for showing company (C)'s home electric appliances.
Therefore, when a user is playing a CD player with the CD **10** of this invention, he keeps himself informed of company (A)'s cellular phones, company (B)'s cosmetics, and company (C)'s home electric appliances in the video files of the first data zone **11**.

A web page "htmlpagel.htm" of the web page linking files **121** in the second data zone **12** of the CD **10** is a web page regarding company (A)'s cellular phones, wherein the web page program codes of the "htmlpagel.htm" should contain at least a code for hypertext link to the "product1.dat" so that a user can view the movie of the "product1.dat" regarding company (A)'s cellular phones while he is using a browser to browse the web page―"htmlpage1.htm". Similarly, he can view the movie of the "product2.dat" regarding company (B)'s cosmetics or the movie of the "product3.dat" regarding company (B)'s home electric appliances while he is using the browser to browse a web page - "htmlpage2.htm" or "htmlpage3.htm". In a practical embodiment, the web page linking files **121** of the abovesaid plurality of web pages may be stored concentrically under a directory "Pc" **120,** and the web page linking files **121** are coded in the HyperText Markup Language (HTML).

In the web page linking files **121** of the second data zone **12,** at least a linking file is available for linking with a default web site. In a substantial embodiment of this invention, a web page linking file "payment. htm" **1211,** which contains in its codes at least an instruction for linking with a default web site, is provided such that a user may use a browser to browse web pages, select goods, and link to enter a default web site to proceed payments.

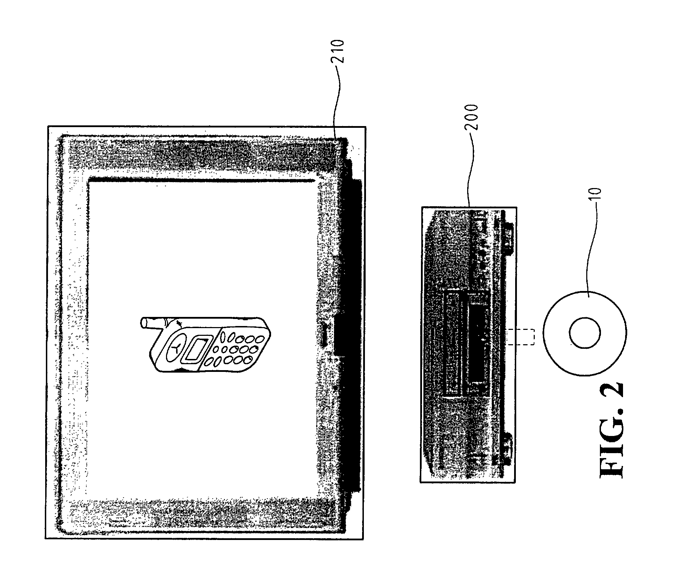

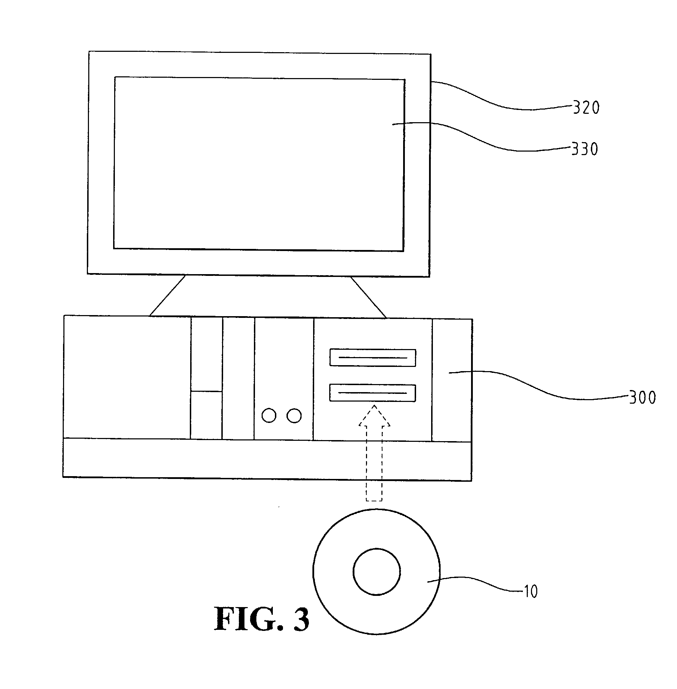

As illustrated in Fig. 2-a schematic view showing that a user is playing a VCD player for playback of the CD of this invention―the CD **10** is played by a VCD player **200,** and the user may sit in front of a TV set **210** and watch a plurality of movies edited on basis of the video data **110** in the first data zone **11** of the CD **10.** Fig. 3 is a schematic view showing that a user is browsing the CD of this invention with a browser. In this example, a user runs a browser in a computer **300** to browse the CD **10,** and a plurality of htmlpages **330** of the web page linking files **121** in the second data zone of the CD **10** is shown in a display **320.**

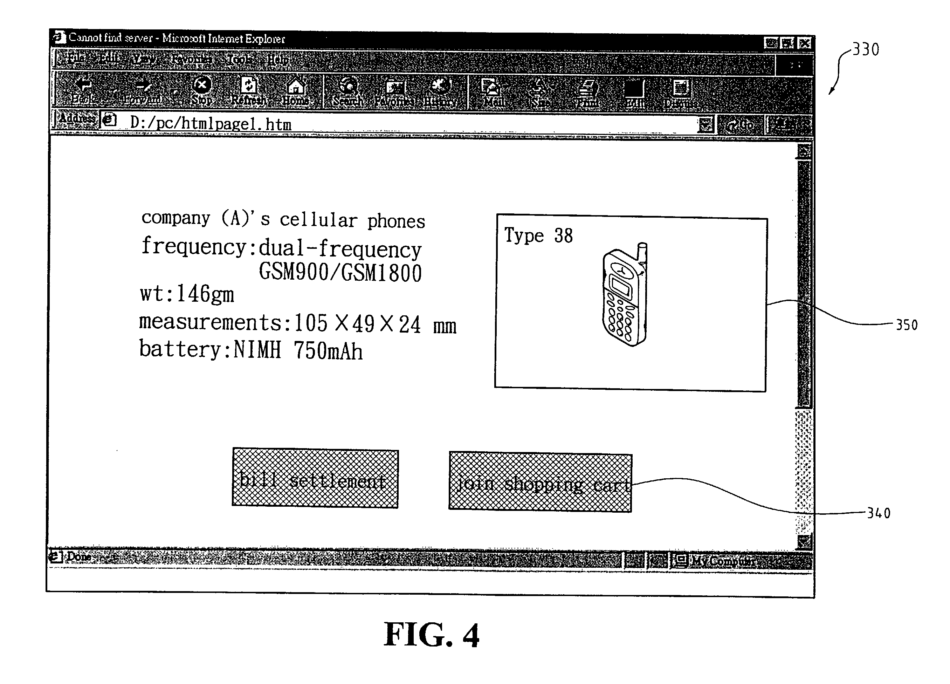

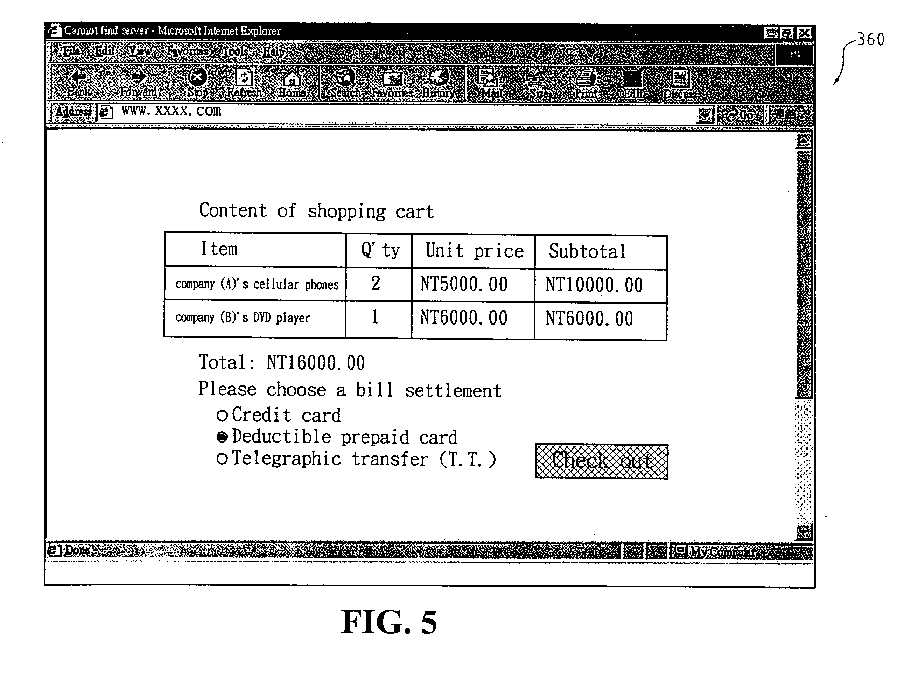

In a typical example of the display of Fig. 3 shown in Fig. 4, a display zone **350** is used for playback and showing the video data **110** in the first data zone **11,** such as a movie for sales promotion of company (A)'s cellular phones. Fig. 5 is a typical example showing that a user is using the CD of this invention to link with a default web site. In this figure, the picture frame **360** expresses a substantial embodiment of abovesaid web page linking file "payment. htm" **1211,** and a user may click the icon **340** to link with a default web site, such as "www. xxxx. com", etc.

In the above described, at least one preferred embodiment has been described in detail with reference to the drawings annexed, and it is apparent that numerous variations or modifications may be made without departing from the true spirit and scope thereof, as set forth in the claims below.

## Claims

1. A compact disk (CD), comprising:
a first data zone for storing video data and providing the same to a video compact disk (VCD) player; and
a second data zone for storing a plurality of web page linking files and providing the same to a computer browser, which can perform hypertext link with the video data of the first data zone;
whereby the VCD player will perform playback of the video data stored in the first data zone if the CD is placed in the VCD player, or a computer will run a browser to access the web page linking files if the CD is placed in the computer.

2. The compact disk (CD) according to claim 1, wherein the video data in the first data zone are VCD-formatted.

3. The compact disk (CD) according to claim 1, wherein the video data in the first data zone are SVCD-formatted.

4. The compact disk (CD) according to claim 1, wherein the video data in the first data zone are DVD-formatted.

5. The compact disk (CD) according to claim 1, wherein the second data zone further contains an autorun file so that the computer will run an inside browser to access the web page linking files when the compact disk is placed in the computer.

6. The compact disk (CD) according to claim 1, wherein at least one of the web page linking files is capable of linking with a default web site.

7. The compact disk (CD) according to claim 1, wherein the web page linking files of the second data zone are coded in HyperText Markup Language (HTML).
